(19) Europäisches Patentamt
European Patent Office
Office européen des brevets

(11) **EP 4 209 846 A1**

(12) **EUROPEAN PATENT APPLICATION**

(43) Date of publication:
**12.07.2023 Bulletin 2023/28**

(21) Application number: **22150693.4**

(22) Date of filing: **10.01.2022**

(51) International Patent Classification (IPC):
**G05B 23/02** (2006.01)    **G06N 3/04** (2023.01)
**G06N 20/00** (2019.01)

(52) Cooperative Patent Classification (CPC):
**G05B 23/024; G06N 3/045; G06N 20/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **ASML Netherlands B.V.**
**5500 AH Veldhoven (NL)**

(72) Inventors:
• **KOULIERAKIS, Eleftherios**
**5500 AH Veldhoven (NL)**

• **GANTAPARA, Anjan Prasad**
**5500 AH Veldhoven (NL)**
• **KHEDEKAR, Satej, Subhash**
**5500 AH Veldhoven (NL)**
• **ROSTAMI, Hamideh**
**5500 AH, Veldhoven (NL)**

(74) Representative: **ASML Netherlands B.V.**
**Corporate Intellectual Property**
**P.O. Box 324**
**5500 AH Veldhoven (NL)**

(54) **HIERARCHICAL ANOMALY DETECTION AND DATA REPRESENTATION METHOD TO IDENTIFY SYSTEM LEVEL DEGRADATION**

(57)    A computer-implemented method for training a diagnostic model for diagnosing a production system, wherein the production system comprises a plurality of sub-systems. The adaptive diagnostic model comprises, for each sub-system, a corresponding first learning model arranged to receive input data, and to generate compressed data for the production system in a corresponding compressed latent space. A second learning model is arranged to receive the compressed data generated by the first learning models, and generate further compressed data for the production system in a further compressed latent space. The method comprises performing unsupervised training of the first and second learning models based on training data derived from sensor data characterizing the sub-systems.

Fig. 4

| Inputting data derived from sensor-data characterising a plurality of sub-systems of a production system into a plurality of respective first learning models | 101 |

| Generating, by the first learning models, compressed data for each sub-system based on the data derived from sensor data characterising the plurality of sub-systems | 103 |

| Inputting the compressed data generated by the first learning model into a second learning model | 105 |

| Generating further compressed data based on the compressed data | 107 |

| Performing unsupervised learning of the first learning model and the second model based on the data derived from sensor-data characterising the plurality of sub-systems | 109 |

EP 4 209 846 A1

**Description**

<u>FIELD</u>

The present invention relates to methods and systems for diagnosing a production system, such as to identify function and performance degradation of a production system at system and sub-system level.

<u>BACKGROUND</u>

A lithographic apparatus is a machine constructed to apply a desired pattern onto a substrate. A lithographic apparatus can be used, for example, in the manufacture of integrated circuits (ICs). A lithographic apparatus may, for example, project a pattern (also often referred to as "design layout" or "design") at a patterning device (e.g., a mask) onto a layer of radiation-sensitive material (resist) provided on a substrate (e.g., a wafer).

To project a pattern on a substrate a lithographic apparatus may use electromagnetic radiation. The wavelength of this radiation determines the minimum size of features which can be formed on the substrate. Typical wavelengths currently in use are 365 nm (i-line), 248 nm, 193 nm and 13.5 nm. A lithographic apparatus, which uses extreme ultraviolet (EUV) radiation, having a wavelength within the range 4-20 nm, for example 6.7 nm or 13.5 nm, may be used to form smaller features on a substrate than a lithographic apparatus which uses, for example, radiation with a wavelength of 193 nm.

Low-$k_1$ lithography may be used to process features with dimensions smaller than the classical resolution limit of a lithographic apparatus. In such process, the resolution formula may be expressed as $CD = k_1 \times \lambda/NA$, where $\lambda$ is the wavelength of radiation employed, NA is the numerical aperture of the projection optics in the lithographic apparatus, CD is the "critical dimension" (generally the smallest feature size printed, but in this case half-pitch) and $k_1$ is an empirical resolution factor. In general, the smaller $k_1$ the more difficult it becomes to reproduce the pattern on the substrate that resembles the shape and dimensions planned by a circuit designer in order to achieve particular electrical functionality and performance. To overcome these difficulties, sophisticated fine-tuning steps may be applied to the lithographic projection apparatus and/or design layout. These include, for example, but not limited to, optimization of NA, customized illumination schemes, use of phase shifting patterning devices, various optimization of the design layout such as optical proximity correction (OPC, sometimes also referred to as "optical and process correction") in the design layout, or other methods generally defined as "resolution enhancement techniques" (RET). Alternatively, tight control loops for controlling a stability of the lithographic apparatus may be used to improve reproduction of the pattern at low k1.

In high-tech manufacturing industries such as the semiconductor industry, the rapid growth of data is an essential key for APC (Advanced Process Control) solutions for improved monitoring, prognosis, and diagnosis of production systems. The term "diagnosis" is used here not only to include diagnosing faults in a subject production system, but also including determining other information about the current state of a subject production system, such as how well a system responds to process changes or how well it resembles standard behavior (i.e. the behavior of a population of reference production systems which may be assumed to be operating properly). "Prognosis" refers to making predictions about a future state of the subject production system.

Data-driven approaches are increasingly used for equipment behaviour modelling and monitoring as well as equipment failure diagnosis. They conventionally perform prognosis and diagnosis by training a set of run-to-failure units to build a model for system deterioration. Using the model, features indicative of system deterioration are extracted from raw sensor signals. Predictive maintenance is a key element of condition-based monitoring for both diagnosis and prognosis.

Most data science products address the performance of individual sub-systems, or sub-sub-systems, of the lithographic apparatus. Most of these models are built by training a machine learning model using data describing the proper operation of components of the sub-system, and data describing known historical failures. Such approaches are not possible in case where data describing historic failures is not available, such as when a new product has recently been introduced.

Even when such data is available, in most cases, data-driven diagnostic studies are done post-hoc and on demand, usually when an escalation occurs. Often the analysis of data fails to point to the actual root cause of a problem, so that experts are required to visit the site where the production system is located to perform an analysis. The root cause of a problem may be complex and diagnosing it requires an understanding of multiple sub-systems of a lithographic apparatus and the interaction between them, making it challenging to detect such a fault using only sub-system data.

<u>SUMMARY</u>

Given the limitations of the existing methods, there is a need to develop a machine learning-based framework that can holistically monitor a complex production system such as a lithographic apparatus.

In general terms, the present invention proposes training a diagnostic model, which, once trained, can be used to diagnose a production system (e.g. diagnose a fault in the production system), such as a lithographic apparatus, having a plurality of sub-systems. The diagnostic model is hierarchical, in that it comprises, for each sub-system, a corresponding first learning model arranged to receive input data, and to generate compressed data for the production system in a corresponding compressed latent space; and a second learning model arranged to receive the compressed data generated by the first learning models, and generate further compressed data for the production system in a further compressed latent space. The first and second learning models are trained based on training data derived from sensor data characterizing the sub-systems.

This method advantageously trains a diagnostic model that employs sensor data obtained at a sub-system level, yet describes the production system as a whole, making it possible to diagnose issues involving interaction of multiple ones of the sub-systems.

The hierarchical concept may be further extended in the case that at least one of the plurality of sub-systems of the production system comprises a plurality of sub-sub-systems. The diagnostic model may then further comprise, for each sub-sub-system, a corresponding third learning model arranged to receive input data (e.g. sensor data describing the corresponding sub-sub-system) and to generate sub-sub-system compressed data in a corresponding compressed latent space. In this instance the input data received by the corresponding first learning model comprises the sub-sub-system compressed data for each sub-sub-system. This advantageously enables sub-sub-system data to be accounted for in training the diagnostic model.

More generally, the present concept may be extended to production systems which may be considered as having a hierarchical structure, including a plurality of levels. A first (top) level represents the production system as a whole. Each successive level represents a partitioning of the production system into a respective plurality of units which are smaller than the units of the preceding level. One or more units at each level (except the last level, i.e. the level for which the production system is partitioned into the smallest units) are composed of a corresponding plurality of units at the next level. In other words, there is a hierarchy, with a first (top) level of the hierarchy being the system as a whole, and each subsequent (next lower) level representing a partitioning of one or more of the unit(s) of the preceding layer (i.e. the layer above). In the terminology used above, the first layer is the layer representing the production system as a whole, the second layer is the layer representing the sub-systems, and the third layer is the layer representing the sub-sub-systems.

The diagnostic model has a hierarchical structure which is the same as the hierarchical structure of the production machine. It has the same number of levels, and each level of the diagnostic model has a number of learning models which is equal to the number of units at that level of the hierarchy of the production machine, with a one-to-one correspondence between learning models and units of the production machine. That is, at each level, a learning model is provided for each of the units of the level, to generate corresponding compressed data. For units which do not correspond to a plurality of units of a later level (for example, units of the last level do not correspond to a plurality of units of a later level), each learning model is trained using sensor data relating to the corresponding unit. For the other units, the corresponding learning model is trained using compressed data generated by the learning models of the corresponding units at the next level. In use, sensor data is obtained from the units which do not correspond to a plurality of units of a later level, and the corresponding learning models generate compressed data which is passed to the corresponding units of the next higher level. Thus, compressed data is passed up through the hierarchy until it reaches the learning model of the first (top) level of the hierarchy, where the learning model at that level (the "second learning model" in the terminology above) generates further compressed data for the production system as a whole.

For simplicity, the following discussion will assume that the hierarchy just has at most three levels: a top level for the system as a whole; a second level for the sub-systems; and optionally a third level for the sub-sub-systems.

The first learning models, third learning models (if any) and second learning model may take any form, and different ones of the first learning models, the third learning models and the second learning model may be different types of adaptive models. At least some of the learning models may be trained by an unsupervised learning algorithm (although in principle, it would be possible also to use supervised learning for one or more of the learning models, e.g. by labels being attached to some of the training data).

For example, at least one of the first learning models, at least one of the third learning models, and/or the second learning model may be a representation learning model, such as an autoencoder (any autoencoder-based algorithm, for example a sparse autoencoder, variational autoencoder, etc.) or a learning model which applies a principal component analysis (PCA) to input data. In the case that a principal component analysis is used, this may be based on a linear and/or non-linear kernel.

Alternatively or additionally, at least one of the first learning models, at least one of the third learning models, and/or the second learning model may be a manifold learning model, such as a t-distributed stochastic neighbor embedding ("t-SNE", as described at https://en.wikipedia.org/wiki/T-distributed_stochastic_neighbor_embedding) or a uniform manifold approximation ("UMAP", as described at https://umap-learn.readthedocs.io/en/latest/).

Note that different ones of the learning models may be different adaptive models. For example, a PCA algorithm might be used as the first learning model to generate the latent space for one of the sub-systems, but a t-SNE model might be used as the second learning model for the production system as a whole. Selecting an adaptive model for a given sub-system (or sub-sub-system) based on the forms of sensor data which are collected for the corresponding sub-system (or sub-sub-system) can improve the performance of the diagnostic model.

Optionally, the diagnostic model may also receive information relating to a product of the production system. For example, a product learning model may be included in the diagnostic model which receives "product" sensor data characterizing a product of the production system, and which compresses the product sensor data into another compressed space (the "product latent space"). Data from the product latent space may be one of the inputs to the second learning model.

Once the diagnostic model has been trained, it may be used for diagnosing a subject production system having the same structure as the production model from which the training data was derived. Indeed, the subject production system may be the production model, and the diagnosis may be performed at a time after the training data is obtained from it (e.g. at a time when the production model has developed a fault which is to be diagnosed).

The diagnosis may be performed by: for each sub-system, inputting data derived from sensor data characterizing the sub-system of subject production system into the corresponding first learning model to generate corresponding compressed data for the sub-system of the subject production system; inputting the compressed data generated by the first learning models into the second learning model to generate corresponding further compressed data for the subject production system; and diagnosing the subject production system based on data generated by at least one of the first learning models and/or the second learning model.

In the case that the diagnostic model includes a product learning model, the diagnosis method includes receiving product sensor data characterizing at least one product of the subject production system, and inputting it to the product learning model. Compressed data generated by the product learning model may be one of the inputs to the second learning model.

Diagnosing the production system may include determining the value of at least one anomaly score based on data generated by at least one of the first learning models and/or the second learning model, and determining whether the anomaly score is above a predetermined threshold. If so, the system may output a warning that a fault is suspected in the subject production system.

A particular example of this is in the case that the at least one learning model and/or the second learning model is an autoencoder, that is, an adaptive model which receives data, compresses it into a latent space, and then generates reconstructed data from the compressed data. In this case, the anomaly score may be indicative of a discrepancy (reconstruction error) between the data input to at least one of the first learning models and/or the second learning model, and reconstructed data generated by the at least one first learning model and/or the second learning model. This discrepancy indicates that the compressed data generated by those learning model(s) is statistically different from the data upon which the learning model(s) were trained.

Alternatively or additionally, the anomaly score may be based on data in at least one of the latent spaces and/or the further latent space. The anomaly score may be generated to indicate a discrepancy between the compressed data and/or the further compressed data for the subject production system and database of predetermined compressed data and/or further compressed data for a population of reference production systems. That is, one or more production systems which are assumed to be operating properly. The population of reference production systems may comprise the production system used to generate the training data.

Optionally, it is possible to obtain multiple anomaly scores. For example, a system anomaly score may be derived which relates to the production system as a whole (e.g. in this case it is normally calculated based on at least data generated by the second learning model, and it may also be based on data generated by all the first learning models), and at least one further anomaly score may be derived which relates to a single sub-system and be based on data generated by the corresponding first learning model. The system anomaly score relates to the overall production system and be useful to obtain information about the system as a whole (e.g. the production system has a fault). The further anomaly score may be used to obtain information about the corresponding sub-system (e.g. that the sub-system contributed to the fault, and may be the cause of the fault).

In a further aspect, the invention provides a computer system comprising a processor and a data storage device storing program instructions operative, when performed by the processor, to cause the processor to perform the methods explained above.

In a further aspect, the invention provides a computer program product (e.g. a tangible, non-transitory computer-readable storage medium or an electronic signal transmitted over a communication network) comprising instructions which, when the program is executed by a computer, cause the computer to carry out the steps of the methods explained above.

BRIEF DESCRIPTION OF DRAWINGS

Embodiments of the invention will now be described, by way of example only, with reference to the accompanying schematic drawings, in which:

- Figure 1 depicts a schematic overview of a lithographic apparatus;
- Figure 2 depicts a schematic overview of a lithographic cell;
- Figure 3 depicts a schematic representation of holistic lithography, representing a cooperation between three key technologies to optimize semiconductor manufacturing;
- Figure 4 is a flow diagram showing the steps of a method of training a first learning model and a second learning model;
- Figure 5 depicts a diagram of a first learning model;
- Figure 6 depicts a diagram of a second learning model;
- Figure 7 is a flow diagram showing the steps of a method of generating input data for the method of Figure 4;
- Figure 8 is flow diagram showing the steps of a method of diagnosing a fault in a production apparatus;
- Figures 9A - 9D depict learning models used in a diagnostic model in an embodiment of the present invention;
- Figure 10 is a graph showing expert-assigned anomaly scores of a plurality of sub-systems of a production apparatus over a period of time.
- Figure 11 is a graph showing an anomaly score (reconstruction error) produced by the diagnostic model of Figs. 9A-9D over the period of time.

DETAILED DESCRIPTION

In the present document, the terms "radiation" and "beam" are used to encompass all types of electromagnetic radiation, including ultraviolet radiation (e.g. with a wavelength of 365, 248, 193, 157 or 126 nm) and EUV (extreme ultra-violet radiation, e.g. having a wavelength in the range of about 5-100 nm).

The term "reticle", "mask" or "patterning device" as employed in this text may be broadly interpreted as referring to a generic patterning device that can be used to endow an incoming radiation beam with a patterned cross-section, corresponding to a pattern that is to be created in a target portion of the substrate. The term "light valve" can also be used in this context. Besides the classic mask (transmissive or reflective, binary, phase-shifting, hybrid, etc.), examples of other such patterning devices include a programmable mirror array and a programmable LCD array.

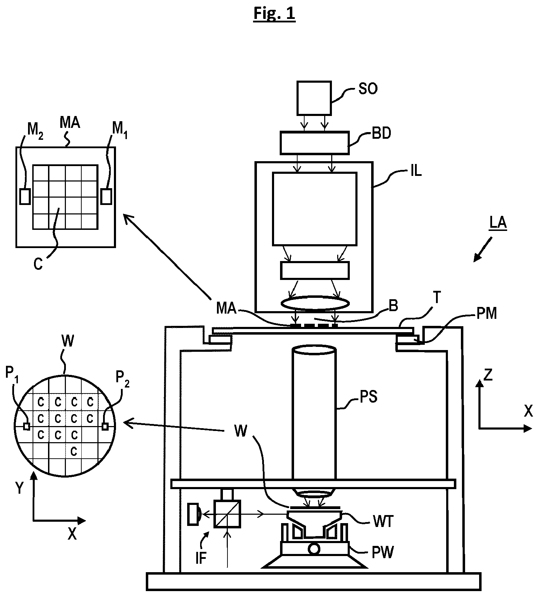

Figure 1 schematically depicts a lithographic apparatus LA. The lithographic apparatus LA includes an illumination system (also referred to as illuminator) IL configured to condition a radiation beam B (e.g., UV radiation, DUV radiation or EUV radiation), a mask support (e.g., a mask table) MT constructed to support a patterning device (e.g., a mask) MA and connected to a first positioner PM configured to accurately position the patterning device MA in accordance with certain parameters, a substrate support (e.g., a wafer table) WT constructed to hold a substrate (e.g., a resist coated wafer) W and connected to a second positioner PW configured to accurately position the substrate support in accordance with certain parameters, and a projection system (e.g., a refractive projection lens system) PS configured to project a pattern imparted to the radiation beam B by patterning device MA onto a target portion C (e.g., comprising one or more dies) of the substrate W.

In operation, the illumination system IL receives a radiation beam from a radiation source SO, e.g. via a beam delivery system BD. The illumination system IL may include various types of optical components, such as refractive, reflective, magnetic, electromagnetic, electrostatic, and/or other types of optical components, or any combination thereof, for directing, shaping, and/or controlling radiation. The illuminator IL may be used to condition the radiation beam B to have a desired spatial and angular intensity distribution in its cross section at a plane of the patterning device MA.

The term "projection system" PS used herein should be broadly interpreted as encompassing various types of projection system, including refractive, reflective, catadioptric, anamorphic, magnetic, electromagnetic and/or electrostatic optical systems, or any combination thereof, as appropriate for the exposure radiation being used, and/or for other factors such as the use of an immersion liquid or the use of a vacuum. Any use of the term "projection lens" herein may be considered as synonymous with the more general term "projection system" PS.

The lithographic apparatus LA may be of a type wherein at least a portion of the substrate may be covered by a liquid having a relatively high refractive index, e.g., water, so as to fill a space between the projection system PS and the substrate W - which is also referred to as immersion lithography. More information on immersion techniques is given in US6952253, which is incorporated herein by reference.

The lithographic apparatus LA may also be of a type having two or more substrate supports WT (also named "dual stage"). In such "multiple stage" machine, the substrate supports WT may be used in parallel, and/or steps in preparation of a subsequent exposure of the substrate W may be carried out on the substrate W located on one of the substrate support WT while another substrate W on the other substrate support WT is being used for exposing a pattern on the other substrate W.

In addition to the substrate support WT, the lithographic apparatus LA may comprise a measurement stage. The measurement stage is arranged to hold a sensor and/or a cleaning device. The sensor may be arranged to measure a property of the projection system PS or a property of the radiation beam B. The measurement stage may hold multiple sensors. The cleaning device may be arranged to clean part of the lithographic apparatus, for example a part of the projection system PS or a part of a system that provides the immersion liquid. The measurement stage may move beneath the projection system PS when the substrate support WT is away from the projection system PS.

In operation, the radiation beam B is incident on the patterning device, e.g. mask, MA which is held on the mask support MT, and is patterned by the pattern (design layout) present on patterning device MA. Having traversed the mask MA, the radiation beam B passes through the projection system PS, which focuses the beam onto a target portion C of the substrate W. With the aid of the second positioner PW and a position measurement system IF, the substrate support WT can be moved accurately, e.g., so as to position different target portions C in the path of the radiation beam B at a focused and aligned position. Similarly, the first positioner PM and possibly another position sensor (which is not explicitly depicted in Figure 1) may be used to accurately position the patterning device MA with respect to the path of the radiation beam B. Patterning device MA and substrate W may be aligned using mask alignment marks M1, M2 and substrate alignment marks PI, P2. Although the substrate alignment marks PI, P2 as illustrated occupy dedicated target portions, they may be located in spaces between target portions. Substrate alignment marks PI, P2 are known as scribe-lane alignment marks when these are located between the target portions C.

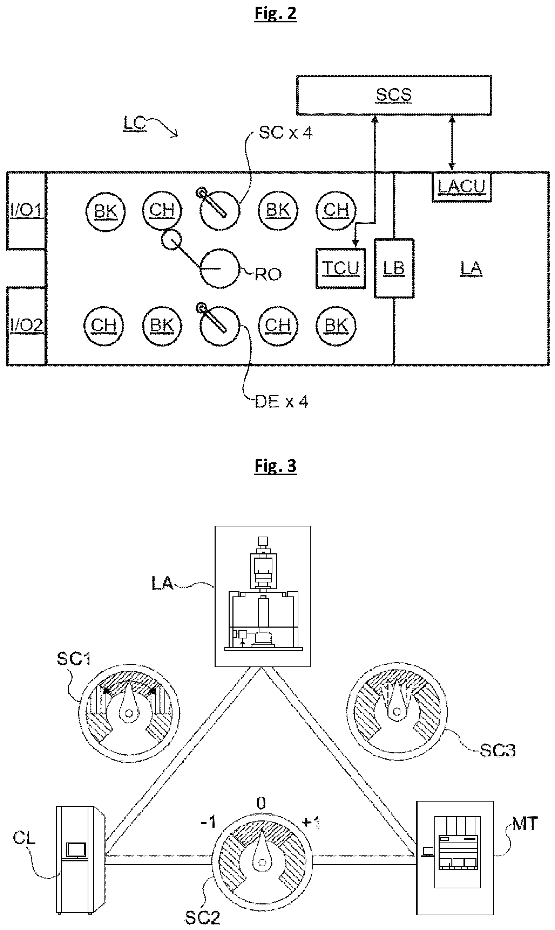

As shown in Figure 2 the lithographic apparatus LA may form part of a lithographic cell LC, also sometimes referred to as a lithocell or (litho)cluster, which often also includes apparatus to perform pre- and post-exposure processes on a substrate W. Conventionally these include spin coaters SC to deposit resist layers, developers DE to develop exposed resist, chill plates CH and bake plates BK, e.g. for conditioning the temperature of substrates W e.g. for conditioning solvents in the resist layers. A substrate handler, or robot, RO picks up substrates W from input/output ports I/O1, I/O2, moves them between the different process apparatus and delivers the substrates W to the loading bay LB of the lithographic apparatus LA. The devices in the lithocell, which are often also collectively referred to as the track, are typically under the control of a track control unit TCU that in itself may be controlled by a supervisory control system SCS, which may also control the lithographic apparatus LA, e.g. via lithography control unit LACU.

In order for the substrates W exposed by the lithographic apparatus LA to be exposed correctly and consistently, it is desirable to inspect substrates to measure properties of patterned structures, such as overlay errors between subsequent layers, line thicknesses, critical dimensions (CD), etc. For this purpose, inspection tools (not shown) may be included in the lithocell LC. If errors are detected, adjustments, for example, may be made to exposures of subsequent substrates or to other processing steps that are to be performed on the substrates W, especially if the inspection is done before other substrates W of the same batch or lot are still to be exposed or processed.

An inspection apparatus, which may also be referred to as a metrology apparatus, is used to determine properties of the substrates W, and in particular, how properties of different substrates W vary or how properties associated with different layers of the same substrate W vary from layer to layer. The inspection apparatus may alternatively be constructed to identify defects on the substrate W and may, for example, be part of the lithocell LC, or may be integrated into the lithographic apparatus LA, or may even be a stand-alone device. The inspection apparatus may measure the properties on a latent image (image in a resist layer after the exposure), or on a semi-latent image (image in a resist layer after a post-exposure bake step PEB), or on a developed resist image (in which the exposed or unexposed parts of the resist have been removed), or even on an etched image (after a pattern transfer step such as etching).

Typically the patterning process in a lithographic apparatus LA is one of the most critical steps in the processing which requires high accuracy of dimensioning and placement of structures on the substrate W. To ensure this high accuracy, three systems may be combined in a so called "holistic" control environment as schematically depicted in Figure 3. One of these systems is the lithographic apparatus LA which is (virtually) connected to a metrology tool MT (a second system) and to a computer system CL (a third system). The key of such "holistic" environment is to optimize the cooperation between these three systems to enhance the overall process window and provide tight control loops to ensure that the patterning performed by the lithographic apparatus LA stays within a process window. The process window defines a range of process parameters (e.g. dose, focus, overlay) within which a specific manufacturing process yields a defined result (e.g. a functional semiconductor device) - typically within which the process parameters in the lithographic process or patterning process are allowed to vary.

The computer system CL may use (part of) the design layout to be patterned to predict which resolution enhancement techniques to use and to perform computational lithography simulations and calculations to determine which mask layout and lithographic apparatus settings achieve the largest overall process window of the patterning process (depicted in Figure 3 by the double arrow in the first scale SC1). Typically, the resolution enhancement techniques are arranged to match the patterning possibilities of the lithographic apparatus LA. The computer system CL may also be used to detect where within the process window the lithographic apparatus LA is currently operating (e.g. using input from the metrology tool MT) to predict whether defects may be present due to e.g. sub-optimal processing (depicted in Figure 3 by the arrow pointing "0" in the second scale SC2).

The metrology tool MT may provide input to the computer system CL to enable accurate simulations and predictions, and may provide feedback to the lithographic apparatus LA to identify possible drifts, e.g. in a calibration status of the lithographic apparatus LA (depicted in Figure 3 by the multiple arrows in the third scale SC3).

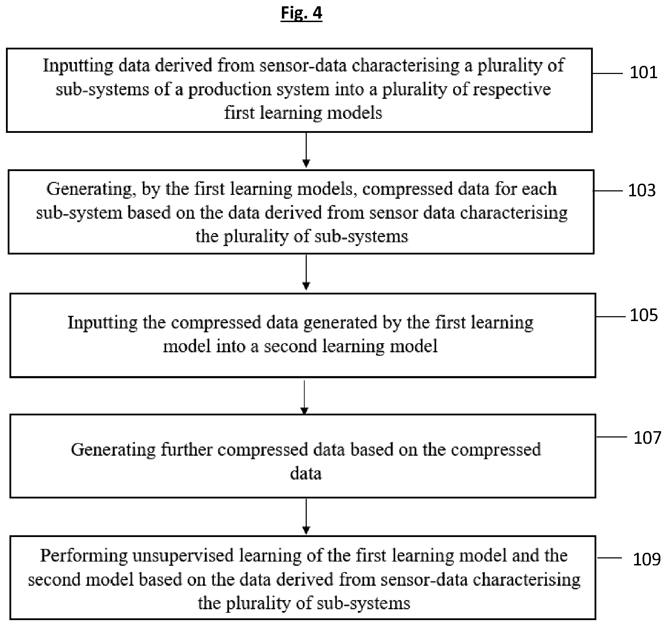

An embodiment of the present invention is described with reference to the drawings. Figure 4 shows a series of steps in a method of training a first learning model and second learning model for diagnosing a production system (e.g. identifying a fault in a production system; determining how well the production system responds to process changes or how well it resembles standard behavior; etc). The production system may be, for example, a lithographic apparatus as described above with reference to Figures 1 to 3. The training of the first learning model and the second learning model is performed when the production system is a healthy system, that is, the production system is not malfunctioning.

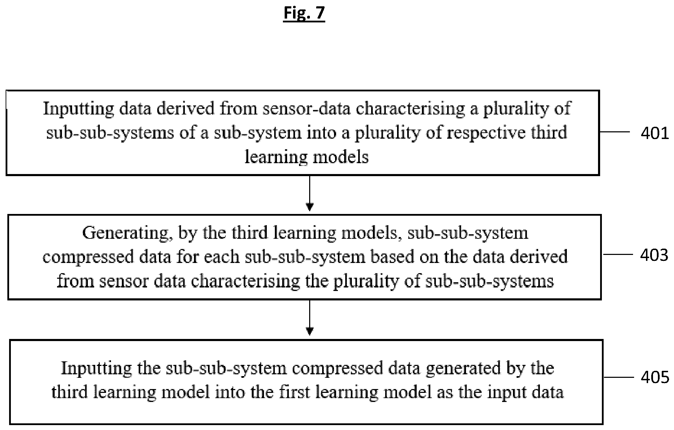

In step 101, data derived from sensor data characterising a plurality of sub-systems of the production system are input into a plurality of respective first learning models. The sub-systems may be, for example, modules of the production system. The sensor data may be, for example, data characterising the behaviour of an individual module, such as temperature data, or beam alignment data. The data derived from sensor data may be raw sensor data, or may be data derived from the sensor data by additional processing of the sensor data. As described below, with reference to Figure 7, the data input to one or more of the first learning models may comprise, or even consist of, data generated by further learning models corresponding to portions (sub-sub-systems) of the sub-system.

The first learning models may be unsupervised learning models that project the data derived from sensor data to a compressed latent space. The unsupervised learning models may be representational learning models, such as: autoencoders, including all autoencoder variants; PCA variants, etc. In principle, one or more of them may be "manifold-learning algorithms", such as t-SNE or UMAP. The first learning models may also be ones typically trained by an unsupervised learning algorithm, though alternatively one or more of them may be semi-supervised learning models, comprising supervised and unsupervised elements.

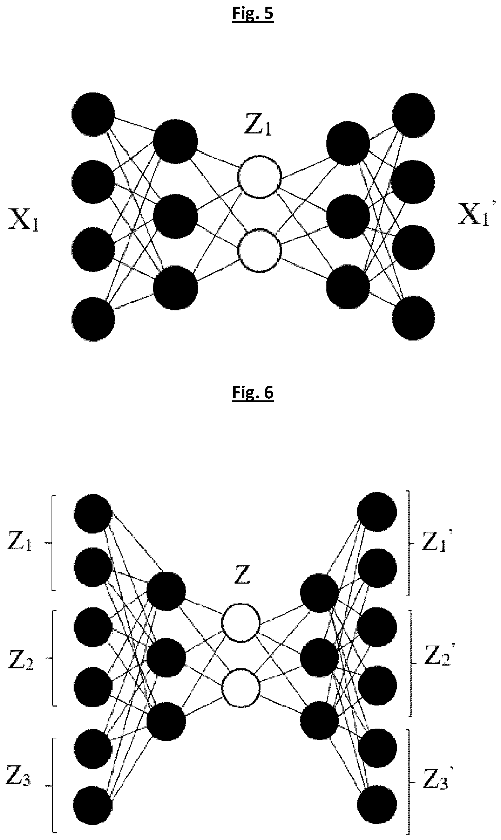

Figure 5 is a diagram of a first learning model which may be used, in the form of an auto-encoder. Each dot represents a "neuron" which takes a data value, and each line represents a numerical value (weight) which is iteratively updated during the training of the learning model. Each neuron (except in the left-most, "first" column) generates its data value as a function of the weighted sum of the data value of the neurons in the preceding column. Thus, each sub-system of the production system may have a corresponding first learning model that maps the data of that sub-system $X_1$ to a latent space $Z_1$ using linear and non-linear transformations. As the number of neurons in the central column of the learning model is less than in the first column, the latent space is "compressed" compared to the space of data values for the first column. The model of Figure 5 also produces a reconstruction $X_1'$ of the input data $X_1$, in a space having the same number of components as the left-most column.

For each sub-system, each data entry is mapped to its corresponding latent space. Consequently, all data that is collected by the production sub-systems may be mapped to a latent space.

In step 103, for each sub-system, the corresponding first learning model generates compressed data for the sub-system.

In step 105, the compressed data generated by the plurality of first learning models is inputted into a second learning model (which may have a structure resembling that of Figure 5).

The second learning model may be a learning model (such as one of a type trained by unsupervised learning) that projects the compressed data to a further compressed latent space. The learning model may be a representational learning model: an autoencoder, including all autoencoder variants; a PCA variant, etc. In principle, it may be a "manifold-learning algorithm", such as t-SNE or UMAP. The second learning models may also be one typically trained by an unsupervised learning algorithm, though alternatively it may be a semi-supervised learning model, comprising supervised and unsupervised elements. The second learning model may be the same type of learning model as the plurality of first learning models, or may be a different type of learning model.

In step 107, the second learning model generates further compressed data for the whole production system using the compressed data generated by the plurality of first learning models. Figure 6 illustrates the generation of the further compressed data. The compressed data $Z_1$, $Z_2$, $Z_3$, is concatenated (to produce a vector denoted $Z_1 Z_2 Z_3$) and used as input to the second learning model, which maps the compressed data to another latent space Z, to generate the further compressed data. The second learning model of Figure 6 also produces a reconstruction $Z_1'$ $Z_2'$ $Z_3'$ of the input data $Z_1 Z_2 Z_3$.

In step 109, the first learning model and the second model are trained using a training set of data derived from sensor data. The first learning models aim to reconstruct the data derived from sensor data $X_1$ for each sub-system respectively, based on the compressed data $Z_1$, to create reconstructed sub-system data $X_1'$. The second learning model aims to reconstruct the compressed data $Z_1$, $Z_2$, $Z_3$, of all sub-systems simultaneously based on the further compressed data Z, to create reconstructed production system data $Z_1'$, $Z_2'$, $Z_3'$.

As a consequence, the further compressed data Z is a dense data representation of all of the data of the production system, wherein the relationships between the sub-systems are captured.

The training of the diagnostic model is now described for the case that the first learning models and second learning model are autoencoders. The production system may comprise sub-systems 1 to n. For each, a respective loss function $L_1$ to $L_n$ is defined. Each loss function, which may be denoted $L_i$ for $i$ in the range 1 to $n$, may be a measure of a reconstruction error of the corresponding first learning model, i.e. the difference between $X_i$ and $X_i'$, (e.g. a sum over the components of X; of the difference between that component of X; and that component of X;')). By this process, minimizing $L_i$ corresponds to minimizing the reconstruction error of the i-th first learning model.

The second learning model is trained using a loss function G. G is a measure of a reconstruction error of the corresponding second learning model, i.e. the difference between $Z_1$, $Z_2$, $Z_3$ and $Z_1'$, $Z_2'$, $Z_3'$, (e.g. a sum over the components of $Z_1$, $Z_2$, $Z_3$ of the difference between that component of $Z_1$, $Z_2$, $Z_3$ and that component of $Z_1'$, $Z_2'$, $Z_3'$). By this process, minimizing G corresponds to minimizing the reconstruction error of the second learning model.

A combined loss function can be written as follows:

$$\sum_i L_i + G(z_1, \cdots, z_m) \qquad (1)$$

The training algorithms corresponds to finding the parameter values (weights) of the first learning models and second learning model which give:

$$\arg\min \sum_i L_i + G(z_1, \cdots, z_m).$$

The first learning models and second learning models may be trained jointly (i.e. with updates to different ones of the learning models being performed simultaneously, or interleaved with each other in time) to minimize the combined loss function (1).

In an alternative, the first learning models may be trained first using the corresponding loss functions, and the second learning model trained subsequently based on the loss function G.

Optionally, in either case, the training may be performed by one or more computers, optionally at different locations. For example, the training of the second learning model can be facilitated with a federated learning approach where only the data from the latent space of each first learning model is shared with a central server, thus allowing a quick and timely training of all the learning models.

The diagnostic model may further comprise a plurality of third learning models. The third learning models may be employed when at least one of the plurality of sub-systems comprises a plurality of sub-sub-systems. The generation of the data input to the first learning models using the third learning models is described with reference to Figure 7.

In step 401, data derived from sensor data characterising a plurality of sub-sub-systems of the at least one sub-system are input into a plurality of respective third learning models. The sub-sub-systems may be, for example, parts of a module of the production system. The sensor data may be, for example, data characterising the behaviour of an individual part of a module, such as temperature data, or beam alignment data. The data derived from sensor data may be raw sensor data, or may be data derived from the sensor data by additional processing of the sensor data.

In step 403, for each sub-sub-system, the respective third learning model generates compressed data for the sub-sub-system. The third learning models may be unsupervised learning models that project the data derived from sensor data to a compressed latent space. The unsupervised learning models may be representational learning models (autoencoders, including all autoencoder variants;; PCA variants, etc) and/or manifold learning models. The third learning models may also be trained by semi-supervised learning, comprising supervised and unsupervised elements.

For each sub-sub-system, each data entry is mapped to its corresponding latent space. Consequently, all data that is collected fior the sub-sub-systems may be mapped to a latent space.

In step 405, the compressed data generated by the plurality of third learning models is inputted into the first learning model as the input data of the first learning model.

In the case that the diagnostic model includes one or more third learning models, step 109 of the method of Figure 4 further includes training the third learning model(s) using data derived from sensor data describing the corresponding sub-sub-system. If the third learning models are representational learning models, they are trained, upon receiving sensor data for the corresponding sub-sub-system, to generate compressed data ("sub-sub-system compressed data), and then to reconstruct the received sensor data, to create reconstructed sub-sub-system sensor data. The training of the third learning model(s) optimises a loss function which describes a reconstruction error of the sub-sub-system compressed data. This loss function may be added to the combined loss function (1), so that the third learning model(s) are trained jointly with the first learning models and second learning model.

Once the first learning model and the second learning model (and any third learning model(s)) have been trained, they can be used as a diagnostic model for diagnosing (e.g. diagnosing a fault in) a subject production apparatus.

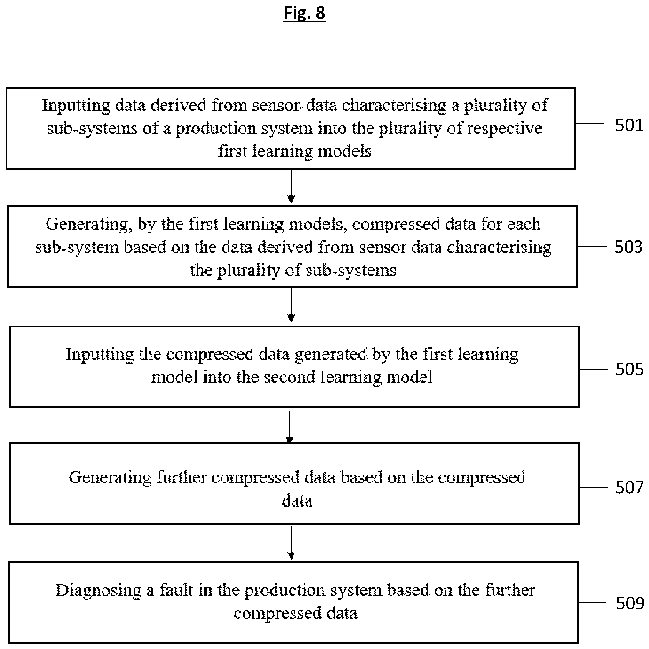

A method of diagnosing a fault in a subject production system is described with reference to Figure 8. The subject production may be the same system as the production system, or may be a different production system comprising the same sub-systems (and the same sub-sub systems, if any) as the production system.

In step 501, data derived from sensor data characterising a plurality of sub-systems of the subject production system are input into the plurality of respective first learning models. The sub-systems may be, for example, modules of the subject production system. The sensor data may be, for example, data characterising the behaviour of an individual module, such as temperature data, or beam alignment data. The data derived from sensor data may be raw sensor data, or may be data derived from the sensor data by additional processing of the sensor data. In the case that the production system comprises sub-sub-systems, the data input to the first learning models may be generated using the third learning models, as explained above with reference to Figure 7.

In step 503, for each sub-system, the first learning model generates compressed data for the sub-system. For each sub-system, each data entry is mapped to its corresponding latent space. Consequently, all data that is collected by the subject production sub-systems may be mapped to a latent space.

In step 505, the compressed data generated by the plurality of first learning models is inputted into the second learning model.

In step 507, the second learning model generates further compressed data for the whole production system using the data generated by the plurality of first learning models.

In step 509, a fault in the subject production apparatus may be identified based on the further compressed data. Diagnosing a fault in the production system may comprise determining whether at least one anomaly score of data generated by at least one the first learning model and/or the second learning model is above a predetermined threshold.

In the case where the first learning model(s) and/or second learning model are autoencoders, at least one of the anomaly scores may be indicative of a discrepancy (reconstruction error) between the data input to the learning model(s) and reconstructed data generated by the learning model(s) upon receiving the compressed data.

Alternatively or additionally, at least one of the anomaly scores may be indicative of a discrepancy between the data generated by at least one of the first learning models in its corresponding latent space(s) and/or the second learning model in its further latent space, and a library of corresponding data relating to a population of production machines of the same system.

Optionally, the at least one anomaly score may comprise a system anomaly score which relates to the production system as a whole. This may be calculated based on at least data generated by the second learning model, and it may also be based on data generated by one or more of the first learning models. The system anomaly score is indicative of the subject production system as a whole.

Additionally or alternatively, at least one anomaly score may relate to a single sub-system and be based on data generated by the corresponding first learning model. This anomaly score may be used to obtain information about the corresponding sub-system (e.g. that the sub-system contributed to the fault, and may be the cause of the fault).

As mentioned above the production machine and subject production machine may be a lithographic apparatus. In this case, for example, one of the sub-systems may be the seed module. The sub-sub-systems for this sub-system may comprise a Beam Shaping Module, a Pre-Pulse Sub Module, a Pre-Amplifier Module, a Main Pulse Sub Module, a Delay Line Module, and an Optical Diode module.

The deployment of such a framework allows for a better understanding and evaluation of the overall performance of a production system. For example, a sub-system may start drifting from its desired position, and this will be captured by its compressed data. Another sub-system may then try to correct for it, and this will also be captured by its compressed data. If the production system is a lithographic apparatus, the further compressed data will indicate that the lithography system is still achieving a desirable performance level, if its anomaly score is low.

In some applications of the present technique, the collected sensor data may be in the form of irregularly-sampled and asynchronous time series. The embodiments explained above can be adapted for such situations using approaches such as set functions (see "Set Functions for Time Series", Max Horn et al (20202), https://arxiv.org/abs/1909.12064).

Optionally, in addition to data from the first learning models, the second learning model of the diagnostic model may receive data derived from sensor data from at least one product of the production system (during the training of the diagnostic model) and from at least one product of the subject production system (during the diagnosis of the subject production system). For example, the diagnosis model may further comprise a product learning model which is trained jointly with the other learning models of the learning system. The product learning model receives "product" sensor data characterizing a product of the production system, and compresses the product sensor data into another compressed space (the "product latent space"). Data from the product latent space may be one of the inputs to the second learning model.

An example of the method will now be described for a lithographic apparatus which is assumed to include only two sub-systems: a phase shift mask (PSM) for which sensor data is available and a sub-system having sensor data in the form of multiple correlation coefficient (MCC) data. The lithographic system is for the production of wafers, and sensor data (wafer quality (WQ) data) is collected for wafers produced by the production apparatus. The diagnosis model comprises a product learning model configured to receive the WQ data, and two first learning models configured to receive the PSM sensor data and the MCC data respectively.

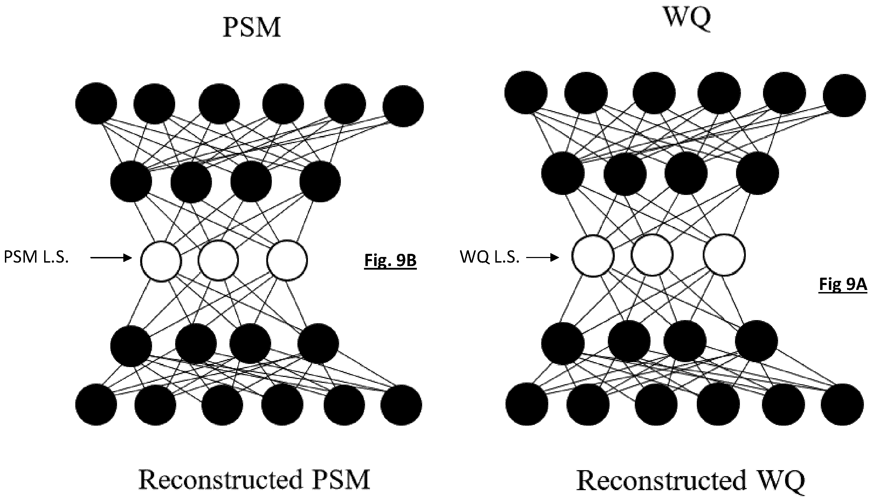

Specifically, the WQ data is used as the input to a product learning model of the diagnosis model illustrated in Figure 9A. This is an auto-encoder which compresses the WQ data into a product latent space ("WQ L.S."). The auto-encoder is trained to generate reconstructed WQ data.

The PSM sensor data is used as the input to a first learning model of the diagnosis model illustrated in Figure 9B. This is an auto-encoder which compresses the PSM sensor data into a latent space ("PSM L.S."). The auto-encoder is trained to generate reconstructed PSM sensor data.

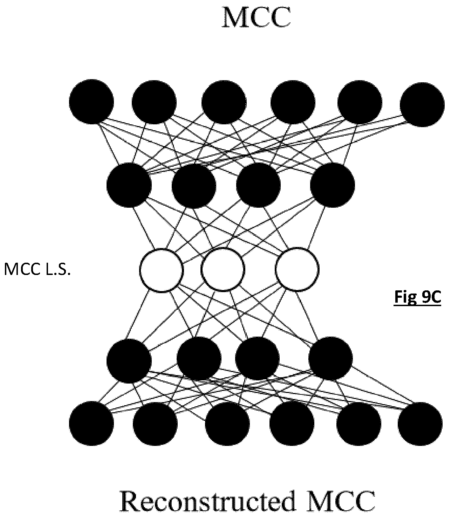

The MCC data is used as the input to a first learning model of the diagnosis model illustrated in Figure 9C. This is an auto-encoder which compresses the MCC data into a latent space ("MCC L.S."). The auto-encoder is trained to generate reconstructed MCC sensor data.

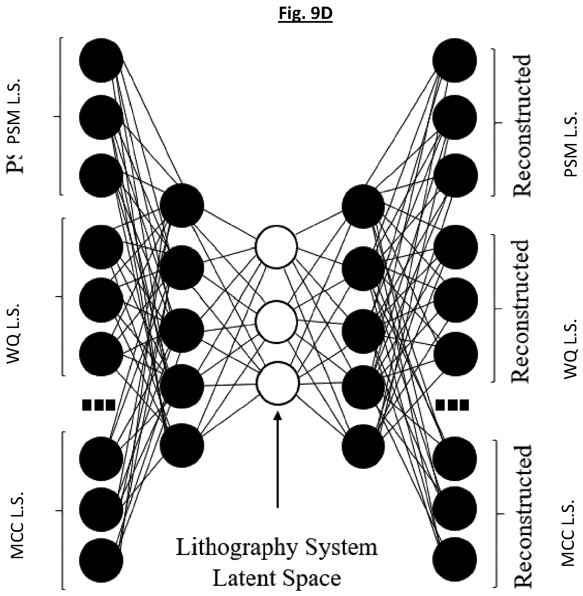

The data in the product latent space and the latent spaces of the two first learning models are the inputs to a second learning model illustrated in Figure 9D. This is an auto-encoder which compresses the data it receives into a further latent space ("the lithography system latent space") relating to the whole lithographic apparatus.

An experiment was performed for such a system. The diagnostic model was trained using training data during a time when it was believed that there was no significant drift in the lithographic apparatus.

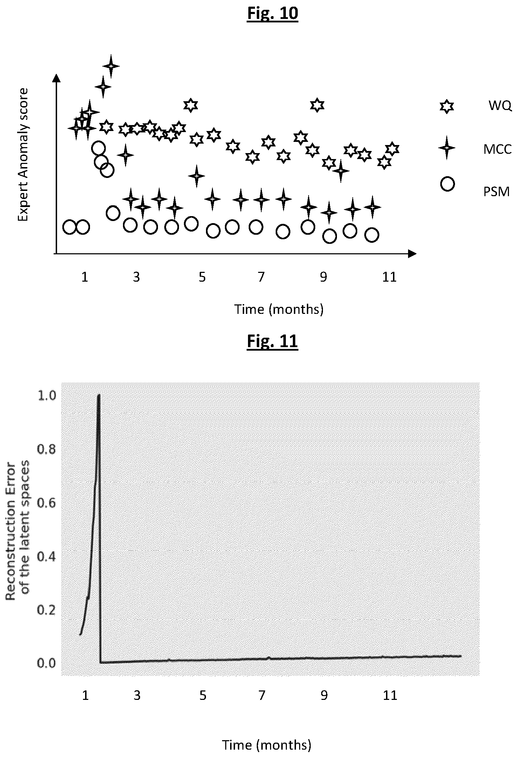

Subsequently, during a period of time of about 11 months, human experts were asked to assess the WQ data, the MCC data and the PSM data of a subject production system, and for each produce a corresponding expert anomaly score. The results are shown schematically in Figure 10, where each expert anomaly score for the PSM sub-system is shown by a circle, each expert-assigned anomaly score for the MCC sub-system is shown by a star with four points, and each expert-assigned anomaly score for the wafer quality is shown by a star with six points. The expert anomaly scores for the MCC data and the PSM data were high at the end of the second month (this was a period in which a plate of the lithographic apparatus was swapped), but otherwise low, whereas the WQ data had a high expert anomaly score throughout the period.

Figure 11 shows an anomaly score for the period generated by a trained diagnostic model having the structure shown in Figure 9A-9D. The anomaly score is calculated as a sum of reconstruction errors, upon receiving sensor data for the subject production machine, by the product learning model of Figure 9A, the first learning models of Figures 9B and 9C, and the second learning model of Figure 9D. As can be seen, the anomaly score rose during the first month, was high at the end of the first month, but later was low. This result confirms the expert anomaly scores shown in Figure 10. This example illustrates the power of the proposed method to capture functional or performance degradation both at system and sub-system level.

In summary, examples of the proposed method enable analysis of each sub-system of a production system as well as analysis of the full production system. The framework allows a better evaluation of the overall performance: if a sub-system drifts this will be captured by its latent space. If another sub-system tries to correct for it, this will also be captured in its latent space. The latent space of the second learning model indicates that overall performance is acceptable if an anomaly score relating to the second learning model (e.g. its reconstruction error) is low. Thus, the method identifies performance and functional degradation at the system and sub-system levels. It is robust, so as not to trigger on set point changes and harmless sub-system drifts, and can be implemented even if data describing historic failures is not available. The method allows direct study of different data sources and types (collector images, signal sequences, event logs, etc.).

In addition, the method allows for the combination of different data types and data sources to be analyzed in a compressed and insightful way, by appropriate selection of the learning models. For instance, in the case that the production system is a lithographic apparatus as described above, collector images may be processed by Convolutional Autoencoders, sequences in the projection optics box may be processed by LSTM Autoencoders, and regular tabular data from a wafer table may be processed by Adversarial Latent Autoencoders.

Further provided is a computer system comprising a processor and a data storage device storing program instructions operative, when performed by the processor, to cause the processor to perform the steps of the above described method.

Also provided is a computer program product comprising instructions which, when the program is executed by a computer, cause the computer to carry out the steps of the above-described method.

Further embodiments of the invention are disclosed in the list of numbered clauses below:

1. A computer-implemented method for training a diagnostic model for diagnosing a production system, wherein the production system comprises a plurality of sub-systems,

the diagnostic model comprising:

for each sub-system, a corresponding first learning model arranged to receive input data, and to generate compressed data for the corresponding sub-system in a corresponding latent space; and
a second learning model arranged to receive the compressed data generated by the first learning models, and generate further compressed data for the production system in a further latent space;

the method comprising performing training of the first and second learning models based on training data derived from sensor data characterizing the sub-systems.

2. A computer-implemented method according to clause 1, wherein:

at least one of the plurality of sub-systems comprises a plurality of sub-sub-systems;
the diagnostic model further comprises, for each sub-sub-system, a corresponding third learning model arranged to receive input data which is sensor data for the corresponding sub-sub-system, and to generate sub-sub-system compressed data in a corresponding latent space; and
the input data received by the corresponding first learning model is the sub-sub-system compressed data for each sub-sub-system.

3. A computer-implemented diagnostic method for diagnosing a subject production system which comprises a plurality of sub-systems, using an diagnostic model trained by a method according to clause 1 or clause 2, the diagnostic method comprising:

for each sub-system, inputting data derived from sensor data characterizing the sub-system of subject production system into the corresponding first learning model to generate corresponding compressed data for the sub-system of the subject production system;
inputting the compressed data generated by the first learning models into the second learning model to generate corresponding further compressed data for the subject production system; and
diagnosing the subject production system based on data generated by at least one of (i) at least one of the first learning models and (ii) the second learning model.

4. A computer-implemented method according to any preceding clause, wherein at least one of the first learning models and the second learning model is a representation learning model or a manifold learning model.
5. A computer-implemented method according to clause 4, wherein at least one of the first learning models and the second learning model is an autoencoder.
6. A computer-implemented method according to clause 4, wherein at least one of the first learning models and second learning model apply a principal component analysis to input data.
7. A computer-implemented method according to clause 4, wherein at least one of the first learning models and second learning model is a t-distributed stochastic neighbor embedding.
8. A computer-implemented method according to clause 4, wherein at least one of the first learning models and second learning model is a Uniform Manifold Approximation.
9. A computer-implemented method according to any preceding clause, wherein the production system is the subject production system at an earlier time.
10. A computer-implemented method according to any preceding clause, wherein diagnosing the production system comprises determining whether an anomaly score of the data generated by the second learning model is above a predetermined threshold.
11. A computer-implemented method according to clause 10, wherein the second learning model is an autoencoder, and the anomaly score is indicative of a discrepancy between the compressed data generated by the first learning models and reconstructed data generated by the second learning model upon receiving the compressed data generated by the first learning models.
12. A computer-implemented method according to clause 10 or clause 11, in which at least one of the first learning models is an autoencoder, and the anomaly score is indicative of a discrepancy between the data input to at least one of the first learning models which is an autoencoder, and reconstructed data generated by the at least one of the first learning models.
12. A computer-implemented method according to clause 10 or clause 11 in which the anomaly score is based on data in at least one of the latent spaces.
13. A computer-implemented method according to clause 12, wherein the anomaly score is indicative of a discrepancy between the compressed data and/or the further compressed data for the subject production system, and compressed data and/or further compressed data for a population of reference production systems.
14. A computer-implemented method according to clause 13, wherein the population of reference production systems comprises the production system used to generate the training data.

15. A computer-implemented method according to any preceding clause, wherein the production system is a lithographic apparatus.

16. A computer system comprising a processor and a data storage device storing program instructions operative, when performed by the processor, to cause the processor to perform the steps of the method of any preceding clause.

17. A computer program product comprising instructions which, when the program is executed by a computer, cause the computer to carry out the steps of the method according to any of clauses 1 to 15.

18. A computer-readable storage medium comprising instructions which, when executed by a computer, cause the computer to carry out the steps of the method according to any of clauses 1 to 15.

Although specific reference may be made in this text to the use of lithographic apparatus in the manufacture of ICs, it should be understood that the lithographic apparatus described herein may have other applications. Possible other applications include the manufacture of integrated optical systems, guidance and detection patterns for magnetic domain memories, flat-panel displays, liquid-crystal displays (LCDs), thin-film magnetic heads, etc.

Although specific reference may be made in this text to embodiments of the invention in the context of a lithographic apparatus, embodiments of the invention may be used in other apparatus. Embodiments of the invention may form part of a mask inspection apparatus, a metrology apparatus, or any apparatus that measures or processes an object such as a wafer (or other substrate) or mask (or other patterning device). These apparatus may be generally referred to as lithographic tools. Such a lithographic tool may use vacuum conditions or ambient (non-vacuum) conditions.

Although specific reference may have been made above to the use of embodiments of the invention in the context of optical lithography, it will be appreciated that the invention, where the context allows, is not limited to optical lithography and may be used in other applications, for example imprint lithography.

While specific embodiments of the invention have been described above, it will be appreciated that the invention may be practiced otherwise than as described. The descriptions above are intended to be illustrative, not limiting. Thus it will be apparent to one skilled in the art that modifications may be made to the invention as described without departing from the scope of the claims set out below.

**Claims**

1. A computer-implemented method for training a diagnostic model for diagnosing a production system, wherein the production system comprises a plurality of sub-systems,

   the diagnostic model comprising:

   for each sub-system, a corresponding first learning model arranged to receive input data, and to generate compressed data for the corresponding sub-system in a corresponding latent space; and
   a second learning model arranged to receive the compressed data generated by the first learning models, and generate further compressed data for the production system in a further latent space;

   the method comprising performing training of the first and second learning models based on training data derived from sensor data characterizing the sub-systems.

2. A computer-implemented method according to claim 1, wherein:

   at least one of the plurality of sub-systems comprises a plurality of sub-sub-systems;
   the diagnostic model further comprises, for each sub-sub-system, a corresponding third learning model arranged to receive input data which is sensor data for the corresponding sub-sub-system, and to generate sub-sub-system compressed data in a corresponding latent space; and
   the input data received by the corresponding first learning model is the sub-sub-system compressed data for each sub-sub-system.

3. A computer-implemented diagnostic method for diagnosing a subject production system which comprises a plurality of sub-systems, using an diagnostic model trained by a method according to claim 1 or claim 2, the diagnostic method comprising:

   for each sub-system, inputting data derived from sensor data characterizing the sub-system of subject production system into the corresponding first learning model to generate corresponding compressed data for the sub-system of the subject production system;

inputting the compressed data generated by the first learning models into the second learning model to generate corresponding further compressed data for the subject production system; and

diagnosing the subject production system based on data generated by at least one of (i) at least one of the first learning models and (ii) the second learning model.

**4.** A computer-implemented method according to any preceding claim, wherein at least one of the first learning models and the second learning model is a representation learning model or a manifold learning model.

**5.** A computer-implemented method according to claim 4, wherein at least one of the first learning models and the second learning model is an autoencoder.

**6.** A computer-implemented method according to claim 4, wherein at least one of the first learning models and second learning model apply a principal component analysis to input data.

**7.** A computer-implemented method according to claim 4, wherein at least one of the first learning models and second learning model is a t-distributed stochastic neighbour embedding.

**8.** A computer-implemented method according to claim 4, wherein at least one of the first learning models and second learning model is a Uniform Manifold Approximation.

**9.** A computer-implemented method according to any preceding claim, wherein the production system is the subject production system at an earlier time.

**10.** A computer-implemented method according to any preceding claim, wherein diagnosing the production system comprises determining whether an anomaly score of the data generated by the second learning model is above a predetermined threshold.

**11.** A computer-implemented method according to claim 10, wherein the second learning model is an autoencoder, and the anomaly score is indicative of a discrepancy between the compressed data generated by the first learning models and reconstructed data generated by the second learning model upon receiving the compressed data generated by the first learning models.

**12.** A computer-implemented method according to claim 10 or claim 11, in which at least one of the first learning models is an autoencoder, and the anomaly score is indicative of a discrepancy between the data input to at least one of the first learning models which is an autoencoder, and reconstructed data generated by the at least one of the first learning models.

**12.** A computer-implemented method according to claim 10 or claim 11 in which the anomaly score is based on data in at least one of the latent spaces.

**13.** A computer-implemented method according to claim 12, wherein the anomaly score is indicative of a discrepancy between the compressed data and/or the further compressed data for the subject production system, and compressed data and/or further compressed data for a population of reference production systems.

**14.** A computer-implemented method according to any preceding claim, wherein the production system is a lithographic apparatus.

**15.** A computer program product comprising instructions which, when the program is executed by a computer, cause the computer to carry out the steps of the method according to any of claims 1 to 14.

**Fig. 1**

**Fig. 2**

**Fig. 3**

**Fig. 4**

| | |
|---|---|
| Inputting data derived from sensor-data characterising a plurality of sub-systems of a production system into a plurality of respective first learning models | 101 |
| Generating, by the first learning models, compressed data for each sub-system based on the data derived from sensor data characterising the plurality of sub-systems | 103 |
| Inputting the compressed data generated by the first learning model into a second learning model | 105 |
| Generating further compressed data based on the compressed data | 107 |
| Performing unsupervised learning of the first learning model and the second model based on the data derived from sensor-data characterising the plurality of sub-systems | 109 |

**Fig. 5**

$X_1$     $Z_1$     $X_1{}'$

**Fig. 6**

$Z_1$   $Z_2$   $Z_3$    $Z$    $Z_1{}'$   $Z_2{}'$   $Z_3{}'$

**Fig. 7**

Inputting data derived from sensor-data characterising a plurality of sub-sub-systems of a sub-system into a plurality of respective third learning models — 401

Generating, by the third learning models, sub-sub-system compressed data for each sub-sub-system based on the data derived from sensor data characterising the plurality of sub-sub-systems — 403

Inputting the sub-sub-system compressed data generated by the third learning model into the first learning model as the input data — 405

## Fig. 8

| |
|---|
| Inputting data derived from sensor-data characterising a plurality of sub-systems of a production system into the plurality of respective first learning models |

— 501

| |
|---|
| Generating, by the first learning models, compressed data for each sub-system based on the data derived from sensor data characterising the plurality of sub-systems |

— 503

| |
|---|
| Inputting the compressed data generated by the first learning model into the second learning model |

— 505

| |
|---|
| Generating further compressed data based on the compressed data |

— 507

| |
|---|
| Diagnosing a fault in the production system based on the further compressed data |

— 509

PSM

WQ

PSM L.S. →

WQ L.S. →

**Fig. 9B**

**Fig 9A**

Reconstructed PSM

Reconstructed WQ

EP 4 209 846 A1

MCC

MCC L.S.

Reconstructed MCC

Fig 9C

**Fig. 9D**

**Fig. 10**

**Fig. 11**

Europäisches
Patentamt

European
Patent Office

Office européen
des brevets

# EUROPEAN SEARCH REPORT

**Application Number**

EP 22 15 0693

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "MODULAR AUTOENCODER MODEL FOR MANUFACTURING PROCESS PARAMETER ESTIMATION", RESEARCH DISCLOSURE, KENNETH MASON PUBLICATIONS, HAMPSHIRE, UK, GB , vol. 685, no. 72 1 May 2021 (2021-05-01), XP007149402, ISSN: 0374-4353 Retrieved from the Internet: URL:ftp://ftppddoc/RDData685_EPO.zip Pdf/685072.pdf [retrieved on 2022-06-23] * paragraphs [0012], [0032] – [0043], [0204], [0250]; figures 7, 8 * | 1-15 | INV. G05B23/02 G06N3/04 G06N20/00 |
| A | EP 3 693 795 A1 (ASML NETHERLANDS BV [NL]) 12 August 2020 (2020-08-12) * paragraphs [0007] – [0010], [0044] – [0050] * | 1-15 | |
| A | US 2020/292608 A1 (YAN WEIZHONG [US] ET AL) 17 September 2020 (2020-09-17) * paragraphs [0068] – [0069], [0079] – [0081] * | 1-15 | TECHNICAL FIELDS SEARCHED (IPC) G05B G06N |
| A | US 2021/270244 A1 (HE YIGANG [CN] ET AL) 2 September 2021 (2021-09-02) * paragraphs [0065] – [0067], [0072] – [0075]; figure 5 * | 1-15 | |

The present search report has been drawn up for all claims

| Place of search | Date of completion of the search | Examiner |
|---|---|---|
| Munich | 24 June 2022 | Juillot, Olivier J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 22 15 0693

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2022

| Patent document cited in search report | | Publication date | Patent family member(s) | | Publication date |
|---|---|---|---|---|---|
| EP 3693795 | A1 | 12-08-2020 | NONE | | |
| US 2020292608 | A1 | 17-09-2020 | US | 2020292608 A1 | 17-09-2020 |
| | | | US | 2020293032 A1 | 17-09-2020 |
| | | | US | 2020293033 A1 | 17-09-2020 |
| US 2021270244 | A1 | 02-09-2021 | CN | 111323220 A | 23-06-2020 |
| | | | US | 2021270244 A1 | 02-09-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 6952253 B

**Non-patent literature cited in the description**

• **MAX HORN et al.** *Set Functions for Time Series,* February 2020, https://arxiv.org/abs/1909.12064